# EUROPEAN PATENT APPLICATION

(11) **EP 1 876 868 A1**
(43) Date of publication of application: **09.01.2008**
(21) Application number: 06729976.8
(22) Date of filing: 24.03.2006
(51) Int. Cl.: H05B 41/24

(54) **DISCHARGE LAMP LIGHTING APPARATUS AND DISCHARGE LAMP LIGHTING CONTROL METHOD**

(30) Priority: 25.04.2005 JP 2005127016; 25.04.2005 JP 2005127018
(71) Applicant: Harison Toshiba Lighting Corp., Imabari-shi, Ehime 794-8510 (JP)
(72) Inventor: HARA, Yoshiaki c/o Harison Toshiba Lighting Corp., Imabari-shi, Ehime 794-8510 (JP); IIDA, Yuuichi c/o Harison Toshiba Lighting Corp., Ehime 794-8510 (JP); TSUTSUI, Naoki c/o Harison Toshiba Lighting Corp., Ehime 794-8510 (JP); ISHIBASHI, Hisashi c/o Harison Toshiba Lighting Corp., Ehime, 794-8510 (JP)
(74) Representative: Kramer - Barske - Schmidtchen
(86) International application number: PCT/JP2006/306028
(87) International publication number: WO 2006/114965

(57) **Abstract**

A chopper circuit generates a voltage to be supplied to a primary side of a transformer, and an inverter circuit supplies an output voltage of the chopper circuit to the primary side of the transformer in a positive phase or a negative phase. Thereby, an electric-discharge lamp connected to a secondary side of the transformer is lighted. A controlling section detects a lamp current, and thereby determines a type of the electric-discharge lamp. The controlling section decides the control value optimal for the chopper circuit and the inverter circuit on the basis of the determination result. The controlling section controls the chopper circuit and the inverter circuit with the decided control value. Thereby, the lighting device drives the electric-discharge lamp in an optimal state. For instance, the lighting device always makes the electric-discharge lamp lighting in a 100% light-modulated state regardless of its type.

## Description

### Technical Field

The present invention relates to a lighting device for an electric-discharge lamp which lights a dielectric-barrier discharge lamp having capacitance, and a method for controlling the lighting of the electric-discharge lamp.

### Background Art

Conventionally, an outer electrode fluorescent lamp has been occasionally adopted, as a light source to be used when a manuscript is read in a copying machine, a scanner or the like. The outer electrode fluorescent lamp has characteristics of using no mercury which gives a heavy load to the environment, hardly causing a change of a light quantity due to an ambient temperature, generating little heat and being capable of changing a luminous color by selecting a phosphor (described in Japanese Patent Laid-Open No. 2001-283783).

The lighting voltage of the outer electrode fluorescent lamp is obtained by an inverter circuit which generates a high-frequency power. The inverter circuit is provided with a push-pull circuit for generating the high-frequency power, and can modulate the light of the outer electrode fluorescent lamp by changing the operation frequency of the push-pull circuit.

Furthermore, Japanese Patent Laid-Open No. 2002-203699 discloses a technology which makes it possible to widen a modulation range for light, by providing first control means for controlling the switching of a push-pull circuit through negative feedback, second control means for modulating light by changing a high-frequency output through controlling the switching, and third control means for controlling the peak value of a voltage applied to the outer electrode fluorescent lamp.

An outer electrode fluorescent lamp is provided with electrodes on the outer surface of a bulb, and has a capacity load formed by the electrodes and the bulb. An inner-outer electrode discharge lamp has also the capacity load formed by the electrodes formed on the inner and outer surfaces of the outer electrode. These lamps are lighted by electric discharge in a dielectric barrier and are referred to as a dielectric-barrier discharge lamp.

The dielectric-barrier discharge lamp changes light quantity due to temperature characteristics of the lamp after a lapse of a predetermined time after having started lighting, even when the lighting voltage and electric current of the lamp have not changed. Besides, the change of the light quantity with the passage of time has characteristics depending on a light-modulation rate.

For instance, when a lighting voltage is increased so as to increase light quantity, a loss in a lamp increases, promotes a temperature rise of a rare gas sealed in a bulb, and deteriorates the efficiency. As a result, the electric-discharge lamp greatly lowers the light quantity. On the contrary, when the lighting voltage is decreased so as to decrease the light quantity, the loss in the lamp decreases, suppresses the temperature rise of the rare gas, and enhances the efficiency. In this case, specifically, the dielectric-barrier discharge lamp shows the tendency of increasing the light quantity.

On this account, when the dielectric-barrier discharge lamp is used as a light source for reading a manuscript with a scanner or the like, the lamp is used only in a limited light-modulation range in which characteristics change comparatively little.

In addition, the dielectric-barrier discharge lamp used for the light source for reading the manuscript with a scanner or the like employs a slim and tubular bulb. However, when the lighting voltage of the lamp is decreased, for instance, for modulating the light, the lamp may show poor light distribution, because the lamp decreases the light quantity in both of longitudinal end sides.

For these reasons, it has been difficult to use a dielectric-barrier discharge lamp in a sufficiently wide light-modulation range. For instance, when the dielectric-barrier discharge lamp is used as a light source for reading a manuscript with a scanner or the like, the lamp could be used only in a range of a light-modulation rate of about 100 to 80%.

Because of this, when the dielectric-barrier discharge lamp is used in a plurality of systems each needing different light quantity from the others, the systems have had a problem of needing to prepare each set of a lamp and a lighting device for the electric-discharge lamp suitable for each system.

In addition, when the electric-discharge lamp is a fluorescent lamp using a rare gas, the fluorescent lamp has had a problem of sharply fluctuating an optical output and providing an unstable optical output for a while right after having started lighting, when the voltage or electric current to be supplied to the fluorescent lamp is changed for modulating the light into a desired quantity level outside the optimal luminosity in the specification of the fluorescent lamp.

An object of the present invention is to provide a lighting device for an electric-discharge lamp, which enables the lamp to be used in a plurality of systems and enables the lamp to emit a desired quantity of light right after the lamp starts lighting, by controlling an operation of each lamp so as to satisfy the light quantity optimal for each system, and to provide a method for controlling the lighting of the electric-discharge lamp.

### Disclosure of Invention

### Means for Solving the Problem

A lighting device for an electric-discharge lamp according to the present invention includes: a transformer which supplies a lighting voltage to the dielectric-barrier discharge lamp; a voltage control circuit for supplying the voltage to a primary side of the transformer; a push-pull circuit which supplies an output of the voltage control circuit to the primary side of the transformer, in a positive phase or a negative phase; determination means which detects a lamp current in the dielectric-barrier discharge lamp and determines a type of the dielectric-barrier discharge lamp on the basis of the detected result; and control means for controlling the voltage control circuit and the push-pull circuit on the basis of the determination result of the determination means.

A lighting device for an electric-discharge lamp according to the present invention is a device for lighting a dielectric-barrier discharge lamp, and includes: a light-quantity-comparing portion which compares a given set light quantity with a detected light quantity of the rare gas fluorescent lamp; and control means for controlling at least one of the voltage and the electric current to be supplied to the rare gas fluorescent lamp so that the set light quantity matches the detected light quantity according to a comparison result of the light-quantity-comparing portion.

A method for controlling the lighting of an electric-discharge lamp according to the present invention is a method for controlling the lighting of the electric-discharge lamp provided with a transformer which supplies a lighting voltage to the dielectric-barrier discharge lamp; a voltage control circuit for supplying the voltage to a primary side of the transformer; an inverter circuit which supplies an output of the voltage control circuit to the primary side of the transformer, in a positive phase or a negative phase; and control means for controlling the voltage control circuit and the inverter circuit: and includes: a detection step of driving the voltage control circuit and the inverter circuit with a first control value and detecting a lamp current in the dielectric-barrier discharge lamp; a determination step of determining a type of the dielectric-barrier discharge lamp on the basis of a detection result in the detection step; a step of deciding a second control value according to the type of the dielectric-barrier discharge lamp on the basis of the determination result in the determination step; and a step of driving the voltage control circuit and the inverter circuit with the second control value.

### Brief Description of the Drawings

Fig. 1 is a circuit diagram showing a lighting device for an electric-discharge lamp according to a first embodiment of the present invention;
Fig. 2 is a side view showing a peripheral side of an outer electrode discharge lamp which is a dielectric-barrier discharge lamp;
Fig. 3 is a longitudinal sectional view of Fig. 2;
Fig. 4 is a developed view of a translucent resin sheet 15;
Fig. 5 is an equivalent circuit diagram of an electric-discharge lamp 6;
Fig. 6 is a timing diagram for describing the operation of a controlling section 5;
Fig. 7 is a flow chart for describing the operation of a controlling section 5;
Fig. 8 is a circuit diagram showing a lighting device for an electric-discharge lamp according to a second embodiment of the present invention;
Fig. 9 is a graph for describing a fluctuation of a light quantity of an electric-discharge lamp;
Fig. 10 is another graph for describing a fluctuation of a light quantity of an electric-discharge lamp;
Fig. 11 is a circuit diagram of a part for controlling light quantity in a controlling section;
Fig. 12 is a view for describing an on-off control of an FET in an inverter circuit;
Fig. 13 is another view for describing an on-off control of an FET in an inverter circuit;
Fig. 14 is a graph for describing a fluctuation of a light quantity in the case of a color copy and a monochromatic copy; and
Fig. 15 is a flow chart for describing an example of a lighting control process with the use of software.

### Best Mode for Carrying Out the Invention

Hereinafter, embodiments according to the present invention will be described in detail with reference to the drawings.

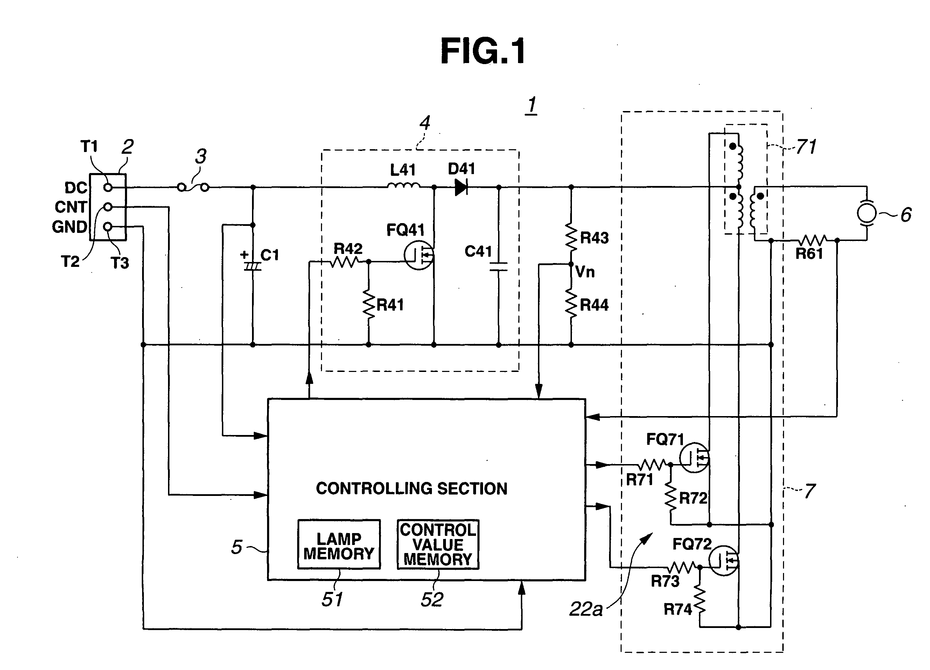

Fig. 1 is a circuit diagram showing a lighting device for an electric-discharge lamp according to a first embodiment of the present invention;

The present embodiment describes an example of a lighting circuit of an outer electrode electric-discharge lamp to be used for illuminating a manuscript in a copying machine and a facsimile and the like. As an outer electrode electric-discharge lamp, a rare gas fluorescent lamp having xenon gas sealed therein is used. The present embodiment describes the case in which each outer electrode electric-discharge lamp having the optimal light quantity is adopted in each system of the copying machine and the facsimile and the like. For instance, a high-speed copying machine and a low-speed copying machine respectively need a different light quantity as a light source for illuminating the manuscript. Specifically, the high-speed copying machine needs a comparatively large light quantity, and the low-speed copying machine needs a comparatively small light quantity.

In this case, when defining a light-modulation rate obtained when a lamp voltage and lamp current optimal for characteristics of each lamp has been applied to the lamp is the 100% modulated light, all the systems respectively adopt a lamp which provides the light quantity optimal for a system, for instance, when the light is used in a 100% light-modulated state.

Specifically, the electric-discharge lamp 6 in Fig. 1 provides an optimal light quantity for the system in which a lighting circuit 1 in Fig. 1 is incorporated, for instance, when the lamp is modulated into a 100% light state. The present embodiment provides a device which can automatically set the electric-discharge lamp, for instance, at a 100% light-modulated state and can drive the lamp 6 in a 100% light-modulated state, even when controlling the lighting of any electric-discharge lamp suitable for any system, by automatically detecting characteristics of the electric-discharge lamp 6.

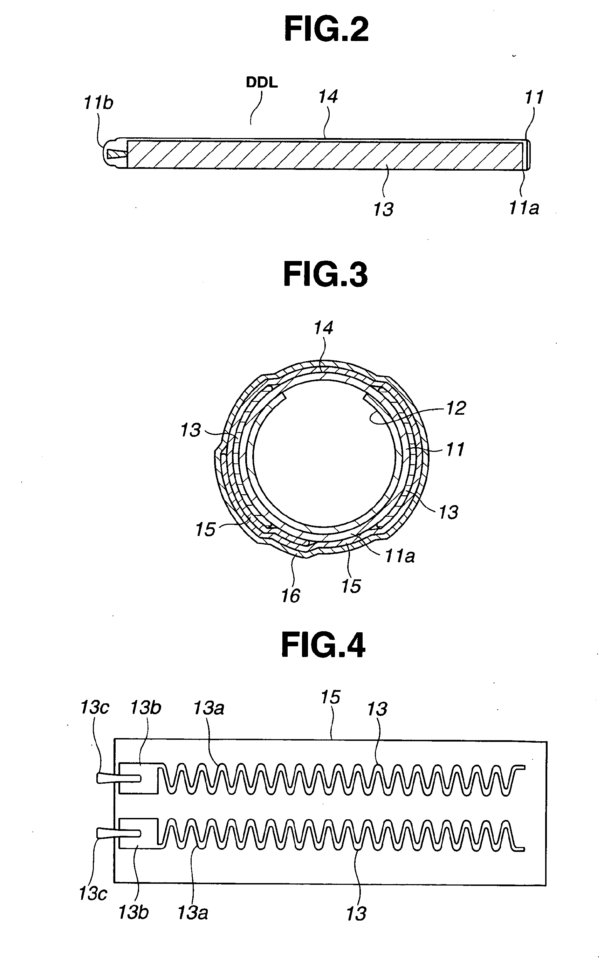

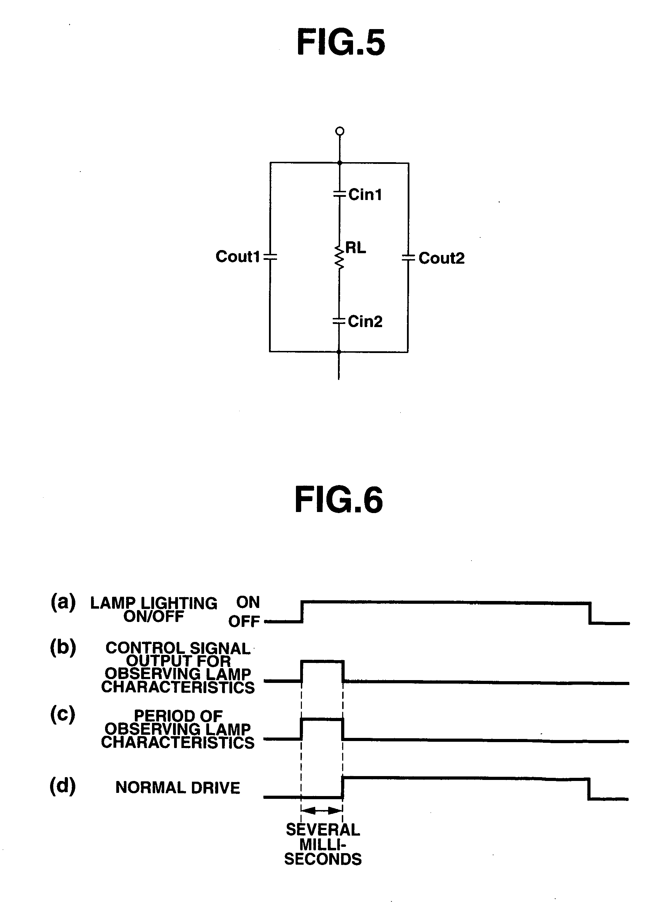

At first, a structure of an outer electrode electric-discharge lamp will be described with reference to Fig. 2 to Fig. 5. Fig. 2 is a side view showing a peripheral surface of the outer electrode electric-discharge lamp that is a dielectric-barrier discharge lamp, and Fig. 3 is a longitudinal sectional view thereof. Fig. 4 is a developed view of a translucent resin sheet 15, and Fig. 5 is an equivalent circuit diagram of the electric-discharge lamp 6.

The electric-discharge lamp 6 has a pair of electrodes 13 and 13 for generating an electric discharge in a glass bulb 11a that is a translucent bulb. In a dielectric-barrier discharge lamp, at least one of the electrodes 13 and 13 is provided on the outer surface or inner surface of the glass bulb 11a. The glass bulb 11a has a luminescent layer provided on its inner face, and a rare gas sealed therein.

Specifically, the electric-discharge lamp 6 is composed of an electric-discharge vessel 11, a phosphor layer 12, a pair of the external electrodes 13 and 13, an aperture 14, the translucent resin sheet 15 and a translucent insulation tube 16, as is shown in the sectional view of Fig. 3.

An electric-discharge vessel 11 has a glass bulb 11 a which is slim, has both ends sealed airtightly, has a diameter of 10 mm and has an effective length of 370 mm, and has an exhaust tip-off portion 11b in one end. The electric-discharge vessel 11 has Xenon sealed therein as an electric-discharge medium. A phosphor layer 12 is formed on the inner surface of the electric-discharge vessel 11, except a longitudinal slit portion.

A pair of external electrodes 13 and 13 are made of an aluminum foil respectively, and are attached onto the outer surface of an electric-discharge vessel 11 separately in parallel so as to face each other, as is shown in Fig. 2. The external electrode 13 is previously stuck onto one surface of a translucent resin sheet 15 which will be described later, and is designed to be arranged at a predetermined position of the outer surface of the electric-discharge vessel 11, when the translucent resin sheet 15 is wound around the periphery of the electric-discharge vessel 11.

In addition, the external electrode 13 is composed of a corrugated primary part 13a of the electrode, a terminal-connecting part 13b and a terminal 13c, as is shown in Fig. 5. The primary part 13a of the electrode has a wave shape and is formed so as to extend over most of a longitudinal portion of the electric-discharge vessel 11. The terminal-connecting part 13b is connected to one end of the primary part 13a of the electrode, and is formed to be rectangular so as to increase a contact area with the terminal 13c. The terminal 13c is bonded to the terminal-connecting part 13b by an electroconductive adhesive. The terminal 13c protrudes to the outside through the translucent resin sheet 15 and a translucent insulation tube 16 that is a translucent heat-shrinkable tube.

The aperture 14 is a slit portion having no phosphor layer 12 formed thereon and is provided along a longitudinal direction of an electric-discharge vessel 11. Accordingly, the inside of the electric-discharge vessel 11 can be seen from the aperture portion 14 of the electric-discharge vessel 11 through a transparent glass bulb 11a.

The translucent resin sheet 15 is made from a transparent PET (polyethylene terephthalate), has a substantially whole length of an electric-discharge vessel 11, and has such a width as to cover the electric-discharge vessel 11 in a circumferential direction from above an aperture 14. As described above, a pair of external electrodes 13 and 13 are attached onto one surface at a predetermined distance. Furthermore, an acrylic adhesive material is applied thereon and is bonded onto the outer surface of the electric-discharge vessel 11. Thereby, a pair of the external electrodes 13 and 13 are arranged sandwiching the aperture 14, and the translucent resin sheet 15 is bonded onto the aperture 14.

A translucent insulation tube 16 is made of a transparent fluorinated resin, and covers the whole circumference of an electric-discharge vessel 11 from above external electrodes 13 and 13 and an aperture 14.

An equivalent circuit of an electric-discharge lamp 6 is expressed by a series circuit of a capacitor Cin1, a load resistance RL and a capacitor Cin2, and a parallel circuit of a capacitor Cout1 and a capacitor Cout2, as shown in Fig. 5. The capacitors Cin1 and Cin2 are formed in between an external electrode 13 and an inner surface of an electric-discharge vessel 11, and have a capacitance. Accordingly, the capacitance of the capacitors Cin1 and Cin2 is decided by the area of the external electrode 13 and the relative permittivity and thickness of the glass which is a component of the electric-discharge vessel 11. As described above, the electric-discharge lamp 6 has at least capacitive properties.

In Fig. 1, an input terminal portion 2 of a lighting circuit 1 is provided with a terminal T1 to which a direct-current (DC) voltage, for instance, a voltage of 24 V is applied from a direct current power supply, a terminal T2 to which an ON/OFF signal CNT of a circuit is input, and a terminal T3 to which a reference potential GND is given.

A source voltage is supplied to a power source end in a chopper circuit 4 that is a voltage control circuit, from the terminal T1 through a fuse 3. The output end of the fuse 3 is also connected to the reference potential point (terminal T3) through a capacitor C1. One end of the capacitor C 1 is connected to the power source end of a controlling section 5, and the source voltage smoothed by the capacitor C 1 is supplied to the controlling section 5. The ON/OFF signal CNT is also supplied to the controlling section 5 from the terminal T2.

A lighting circuit 1 includes a chopper circuit 4 and an inverter circuit 7. The chopper circuit 4 has a coil L41 of which one end is connected to a power source end to which a direct-current voltage is applied, and a field effect transistor FQ41 of which a source-drain path is connected in between the other end of the coil L41 and a reference potential point. The chopper circuit 4 has a series circuit of a diode D41 and a capacitor C41 arranged also in between the other end of the coil L41 and the reference potential point so as to connect them. A resistor R41 is arranged in between a gate of the transistor FQ41 and the reference potential point so as to connect them, and the transistor FQ41 is on-off-controlled by a control signal supplied from the controlling section 5 through a resistor R42.

The chopper circuit 4 increases a voltage supplied to the power source end by saving energy in the coil L41 in an on-period of the transistor FQ41, and outputs the increased voltage from an output end. The output voltage of the chopper circuit 4 is decided by an on-duty of the transistor FQ41. The output voltage of the chopper circuit 4 is smoothed by a smoothing circuit of the diode D41 and the capacitor C41, and is output. A connecting point between the diode D41 that is the output end of the chopper circuit 4 and the capacitor C41 is connected to a midpoint of a step-up transformer 71, and also is connected to the reference potential point through resistors R43 and R44. The resistors R43 and R44 are designed so as to output a control voltage Vn based on the output voltage of the chopper circuit 4 to the controlling section 5.

In Fig. 1, a boost chopper circuit was described as an example, but a depression chopper circuit may be used as well.

A controlling section 5 serving as determination means and control means is designed so as to drive a chopper circuit 4 at constant voltage by generating a control signal according to a fed-back control voltage Vn.

An inverter circuit 7 has a push-pull circuit 22a which is composed of transistors FQ71 and FQ72. The transistor FQ1 has a drain terminal connected to one end of a primary coil of a step-up transformer 71, and a source terminal connected to the other end of a secondary coil of the transformer 71. The transistor FQ2 has a drain terminal connected to the other end of the primary coil of the step-up transformer 71, and a source terminal connected to the other end of the secondary coil of the transformer 71. A control signal is supplied to the gates of the transistors FQ71 and FQ72 from a controlling section 5 through resistors R71 and R73 respectively.

A controlling section 5 outputs a control signal for alternately turning transistors FQ71 and FQ72 on. Thereby, mutually reversal driving pulses are applied to both ends of a primary coil of a transformer 71. A step-up transformer 71 boosts a voltage applied to the primary coil, and outputs the boosted voltage from a secondary coil. One end of the secondary coil is connected to one electrode of an electric-discharge lamp 6, and the other end of the secondary coil is connected to the other electrode of the electric-discharge lamp 6 through a resistor R61.

The resistor R61 is used for detecting a lamp current. The lamp current passing through the resistor R61 is fed back to the controlling section 5.

In the present embodiment, a controlling section 5 has a lamp memory 51 provided with a table showing a relationship between a lamp current and a type of an electric-discharge lamp 6. The controlling section 5 also has a control value memory 51 as a first memory section. A control value memory 52 memorizes information on an on-duty in a chopper circuit 4 for setting a lamp voltage and lamp current optimal for the type of the lamp, and on an on-off frequency of a push-pull circuit in an inverter circuit 7.

The controlling section 5 is composed of a microcomputer or the like, and determines the type of the lamp used as the electric-discharge lamp 6 with the use of the lamp memory 51, on the basis of the lamp current detected by a resistor R61. Furthermore, the controlling section 5 reads out the information to be set at the on-duty of the chopper circuit 4 and on the on-off frequency of the push-pull circuit according to the determined type of the lamp, from the control value memory 52, and outputs a control signal to transistors FQ41, FQ71 and FQ72 in the chopper circuit 4 and the inverter circuit 7, on the basis of the information.

The controlling section 5 is also designed so as to conduct a feedback control of adjusting the control signal to be given to the transistor FQ41, in response to a fed back voltage Vn, and simultaneously adjusting the control signal given to the transistors FQ71 and FQ72 in response to the detected lamp current.

In the above, an example of the controlling section 5 composed of the microcomputer was described, but the controlling section 5 may be composed of discrete parts as well.

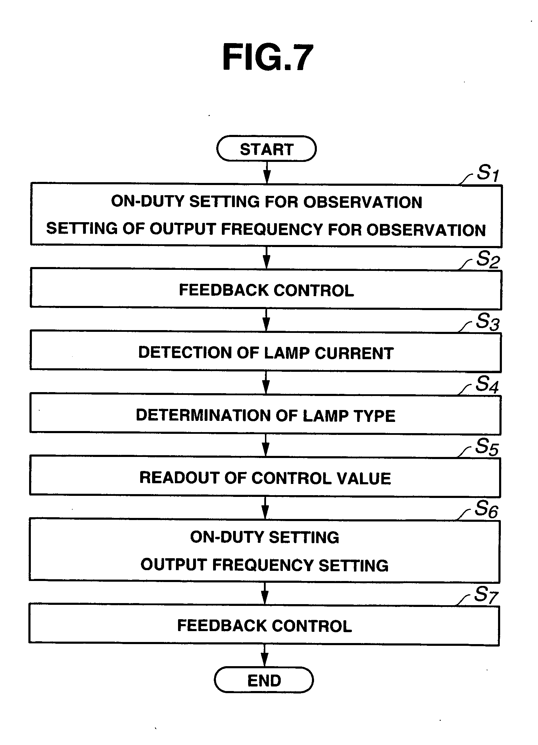

In the next place, an operation of the embodiment structured as described above will be described with reference to Fig. 6 and Fig. 7. Fig. 6 is a timing diagram for describing the operation of a controlling section 5; and Fig. 7 is a flow chart for describing the operation of the controlling section 5.

Suppose that a lighting circuit of Fig. 1 is incorporated in a system such as a copying machine which is not illustrated, and that an electric-discharge lamp 6 is a type suitable for a light quantity necessary for the system.

Suppose that an ON/OFF signal CNT has been turned on at a predetermined timing and an order to light an electric-discharge lamp 6 has been sent to a controlling section 5, as is shown in Fig. 6a. Then, the controlling section 5 outputs a control signal for observing lamp characteristics at first, in advance of a normal drive of the electric-discharge lamp 6, as shown in Fig. 6b. The control signal for observing a lamp is outputted for about several milli-seconds, for instance.

Specifically, the controlling section 5 sets the control signal to be supplied to a chopper circuit 4 at an on-duty for observation, in a step S 1 of Fig. 7. The controlling section 5 also sets an on-off frequency of push-pull transistors FQ71 and FQ72 in an inverter circuit 7 at an output frequency for observation.

Thereby, the chopper circuit 4 generates an output voltage for observation. The output voltage is supplied to a primary coil of a transformer 71. The output of the chopper circuit 4 is fed back to the controlling section 5 as a control voltage Vn by resistors R43 and R44 (step S2). The controlling section 5 controls the chopper circuit 4 so as to make the control voltage Vn constant. Thereby, the chopper circuit 4 stably outputs the output voltage for observation.

On the other hand, the push-pull transistors FQ71 and FQ72 in the inverter circuit 7 are turned alternately on or off in a cycle for observation, on the basis of the control signal sent from the controlling section 5. Thereby, both ends of the primary coil of the transformer 71 obtain driving pulses of a voltage level for observation and the cycle for observation. The driving pulse is boosted by the step-up transformer 71 and the voltage based on the driving pulse is generated in a secondary coil.

When the voltage at a secondary coil arrives at a predetermined lamp voltage for observation after a lapse of predetermined time, an electric-discharge lamp 6 is lighted. When the electric-discharge lamp 6 is lighted, an electric current flows in a resistor R61. The electric current is supplied to a controlling section 5.

After a lapse of time necessary for accurately detecting a lamp current, the controlling section 5 determines a type of the electric-discharge lamp 6 based on a current value of the detected lamp current (steps S3 and S4) with the use of a lamp memory 51. Subsequently, the controlling section 5 reads out an on-duty and an on-off frequency (step S5) to be set according to the determined type of the electric-discharge lamp, with the use of a control value memory 52.

The on-duty and on-off frequency read out from the control value memory 52 are values for giving the lamp voltage and lamp current necessary for adjusting the light to a light quantity optimal for the type of the electric-discharge lamp, for instance, a 100% modulated light, to the electric-discharge lamp.

When a period for observing lamp characteristics has been finished, a controlling section 5 outputs a control signal for driving an electric-discharge lamp 6 of which the type has been determined, for instance, in a 100% light-modulated state, as shown in Figs. 6(c) and (d). Specifically, the controlling section 5 sets an on-duty of a transistor FQ41 in a chopper circuit 4, on the basis of information read out from a control value memory 52. The controlling section 5 also sets an on-off frequency of push-pull transistors FQ71 and FQ72 in an inverter circuit 7, on the basis of the information read out from the control value memory 52.

Thereby, a transformer 71 generates an appropriate lamp voltage corresponding to the on-duty in its secondary coil, and passes an appropriate lamp current corresponding to the on-off frequency in the secondary coil. In addition, the output of the chopper circuit 4 is detected in a form of voltage Vn by resistors R43 and R44, and the controlling section 5 feedback-controls the chopper circuit 4 on the basis of the voltage Vn. Thereby, the secondary coil of the transformer 71 can output a stable lamp voltage. Furthermore, the controlling section 5 detects a lamp current to feedback-control the push-pull transistors FQ71 and FQ72, thereby outputting the stable lamp current as well.

Thus, the lighting device in the present embodiment determines a type of a lamp on the basis of a lamp current when the lamp has started lighting, controls conditions so that the lamp can be driven with a lamp voltage and lamp current optimal for the determined type of the lamp, and can always drive the lamp on the most suitable conditions for any electric-discharge lamp that has been used in a system.

Accordingly, it is not necessary to prepare a set of a lamp and a lighting circuit in every system, but it is possible to build a system by employing a lamp suitable for the system and one lighting circuit.

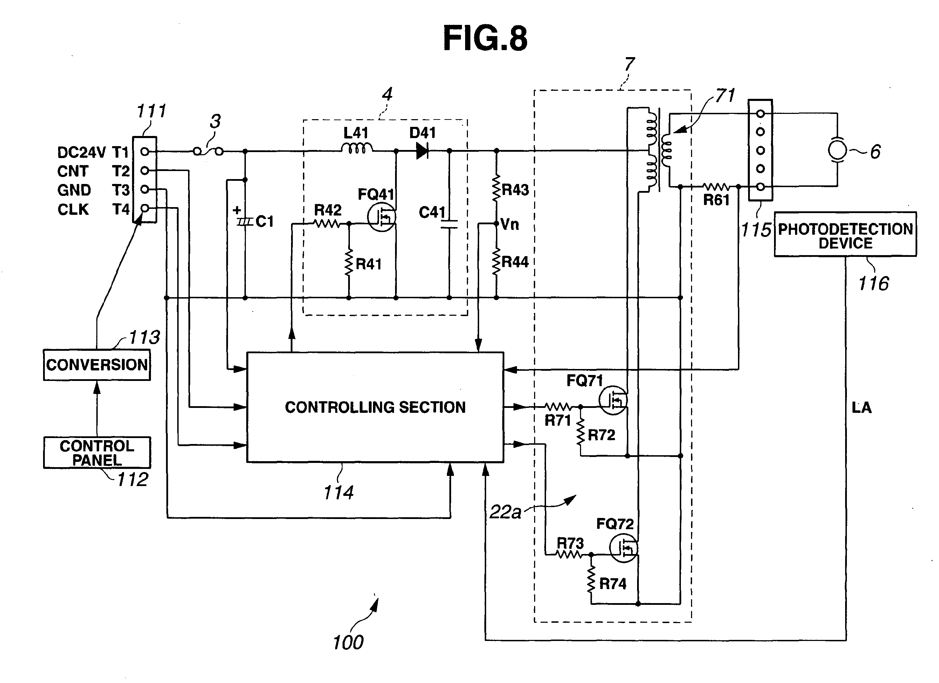

Fig. 8 is a circuit diagram showing a lighting device for an electric-discharge lamp according to a second embodiment of the present invention. In Fig. 8, the same reference character is put for the same element as in Fig. 1, and the description is omitted.

The second embodiment describes an example of a lighting circuit of a rare gas fluorescent lamp to be used for illuminating a manuscript in a copying machine and a facsimile and the like. Fig. 8 shows the circuit diagram of the lighting circuit for the rare gas fluorescent lamp.

The lighting circuit 100 is a circuit for controlling at least one of a voltage and electric current to be applied to the fluorescent lamp containing a rare gas, which is used as a light source of a copying machine, for instance.

An input terminal portion 111 of the lighting circuit 100 is provided with a terminal T 1 to which a direct-current voltage, for instance, a voltage of 24 V, is applied from a direct current power supply, a terminal T2 to which an ON/OFF signal CNT of the circuit is input, a terminal T3 for grounding (GND), and a terminal T4 to which a switching signal CLK of a light quantity is input.

Into the terminal T4, in particular, a signal is input which corresponds to an operation for various function buttons in a control panel of a copying machine. For instance, a selection signal for a color copy or a monochromatic copy, which is determined by a button for selecting the functions, is input into a signal converter circuit 113, as the selection signal sent from the control panel 112. The color copy needs large light quantity and the monochromatic copy needs small light quantity. Accordingly, it can be said that the selection signal is an indication signal which indicates any one of the light quantity for the color copy and the light quantity for the monochromatic copy.

A converter circuit 113 is a circuit which converts a selection signal output from a control panel 112 into such a signal as a controlling section 114 as control means can receive corresponding to the selection signal. For instance, when the controlling section 114 receives the selection signal in a form of a pulse width signal, the converter circuit 113 supplies a signal with a predetermined pulse width according to the selection signal to the controlling section 114 through an input terminal portion 111, so that the controlling section 114 can recognize the selection signal by changing the pulse width of the pulse signal according to the selection signal.

A lighting circuit 100 has an output terminal portion 115 to which an electric-discharge lamp 6 like an outer-electrode-type rare gas fluorescent lamp, for instance, a xenon lamp (hereinafter, also referred to as outer electrode xenon lamp) is connected. The lighting circuit 100 also has a photodetection device 116 for detecting a light quantity arranged in the vicinity of the electric-discharge lamp 6. The photodetection device 116 detects the light quantity and supplies the light quantity signal to a controlling section 114. The photodetection device 116 may be, for instance, any optical sensor as long as it can detect the light quantity, and may be CCD as well.

A controlling section 114 receives an ON/OFF signal CNT for an electric-discharge lamp 6 sent from a terminal T2, a grounding potential signal of a grounded terminal T3, and a signal CLK for switching a quantity of light sent from a terminal T4. The controlling section 114 further receives a direct-current voltage output from a capacitor C1, of which one end is connected to a grounding potential level and the other end is connected to a terminal T1 for the direct-current voltage through a fuse F1.

A lighting circuit 100 includes a chopper circuit 4 and an inverter circuit 7. A gate of a transistor FQ41 receives a control signal supplied from a controlling section 114 through a resistor R42. A voltage output from the chopper circuit 4 is divided by the resistors R43 and R44, and the divided voltage Vn is supplied to the controlling section 114.

The inverter circuit 7 has a push-pull circuit 22a composed of transistors FQ71 and FQ72 that are controlling elements. The push-pull circuit 22a is driven and controlled by the controlling section 114. One end of a secondary coil of a step-up transformer 71 is connected to an output terminal portion 115 through a resistor R61.

A voltage applied to an output terminal portion 115 is monitored by a controlling section 114. The controlling section 114 alternately supplies pulse signals of a rectangular wave to two transistors FQ71 and FQ72 in a push-pull circuit 22a respectively. Specifically, the push-pull circuit 22a applies mutually reverse drive pulse signals to both ends of a primary coil of a step-up transformer 71, based on the control by the controlling section 114. In such a manner, the voltage of a secondary coil of the step-up transformer 71 arrives at a predetermined voltage, and an electric-discharge lamp 6 is lighted.

The luminosity of an electric-discharge lamp 6 is decided by a voltage output from the chopper circuit 4 and a frequency of a pulse signal output from a push-pull circuit 22b. The voltage output from the chopper circuit 4 is decided by a duty ratio of the pulse signal sent to a gate of a transistor FQ41 from the controlling section 114.

Thus configured lighting circuit 100 for a rare gas fluorescent lamp can change the luminosity of the electric-discharge lamp 6, that is, a light quantity, by changing at least one of a voltage and electric current to be supplied to the electric-discharge lamp 6.

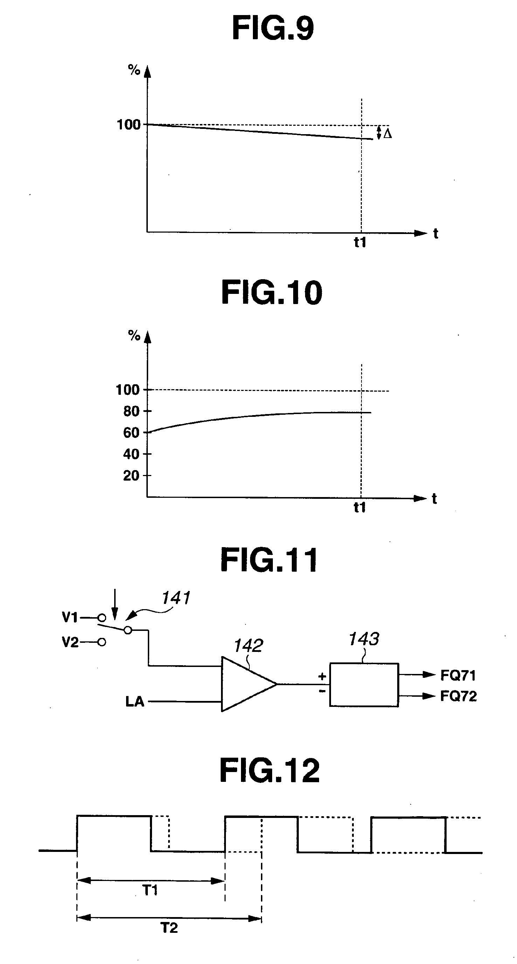

Fig. 9 and Fig. 10 are graphs for describing fluctuations of a light quantity of an electric-discharge lamp 6. In Fig. 9, the vertical axis shows the light quantity of the electric-discharge lamp 6 while supposing that the optimal light quantity is 100(%), and the horizontal axis is a time base.

When at least one of a voltage and an electric current is supplied to the electric-discharge lamp 6 so as to make the light quantity fit to the specification and be optimal (hereinafter, 100%), the luminosity decreases by about 5(%)(Δ) after a lapse of predetermined time (t1), for instance, after about 5 minutes, as is shown in Fig. 9.

A copying machine is required to provide a higher luminosity in color copying and a lower luminosity in monochrome copying, and to make the electric-discharge lamp 6 emit a fixed level of light right after the lamp 6 started lighting.

However, when at least one of the voltage and the electric current to be supplied to the electric-discharge lamp 6 is changed so as to modulate the light, for instance, into a range between 100(%) +20(%) and -20(%), the light quantity emitted from the electric-discharge lamp 6 greatly fluctuates and does not become stable for a while right after the lighting started, as is shown in Fig. 10. Fig. 10 shows a graph taken when the light quantity is tried to be controlled into 80(%) or less. And so, the lighting circuit in the present embodiment controls at least one of the voltage and the electric current to be supplied to the electric-discharge lamp 6 according to a light quantity value detected by a photodetection device 116, so as to keep the light emitted from the electric-discharge lamp 6 constant from the time right after the lighting started.

For instance, the lighting circuit 100 changes at least one of the voltage and the electric current to be supplied to the electric-discharge lamp 6 so that the light quantity can be 120(%) when a color copy is made. Similarly, the lighting circuit 100 changes at least one of the voltage and the electric current to be supplied to the electric-discharge lamp 6 so that the light quantity can be 80(%) when a monochromatic copy is made.

Fig. 11 is a circuit diagram of a part for controlling a light quantity, in the controlling section 114. The controlling section 114 receives a predetermined pulse signal corresponding to a selection signal of a color copy or a monochromatic copy through an input terminal portion 111. The controlling section 114 includes in the inner part: a switching portion 141 for selecting a predetermined voltage signal V 1 or a signal V2 according to the pulse signal; a comparison circuit 142 which receives the predetermined voltage signal to be input through the switching portion 141 and a voltage signal LA that indicates luminosity and is sent from a photodetection device 116, and outputs a differential signal that indicates a difference between these two voltage signals; and a pulse signal generation circuit 143 that receives the differential signal sent from the comparison circuit 142 and outputs a pulse signal having a frequency corresponding to the differential signal to transistors FQ71 and FQ72.

Accordingly, when the monochromatic copy is selected, a voltage V1 corresponding to a light quantity necessary for the monochromatic copy is selected in the switching portion 141. The comparison circuit 142 compares the voltage V1 corresponding to a set value of the light quantity for the monochromatic copy with the voltage signal LA corresponding to the light quantity of an electric-discharge lamp 6, which has been detected by the photodetection device 116; and when the light quantity of the electric-discharge lamp 6 is higher than the set value, outputs a pulse signal to the transistors FQ71 and FQ72 so that the ON-OFF period of the transistors FQ71 and FQ72 can be longer, in other words, so that the ON-OFF frequency can be lower. Fig. 12 is a view showing that the pulse signal with a longer ON/OFF period T2 of the transistors FQ71 and FQ72 is output than the present period T1 so that the emitted light of the electric-discharge lamp 6, that is, the luminosity can be decreased.

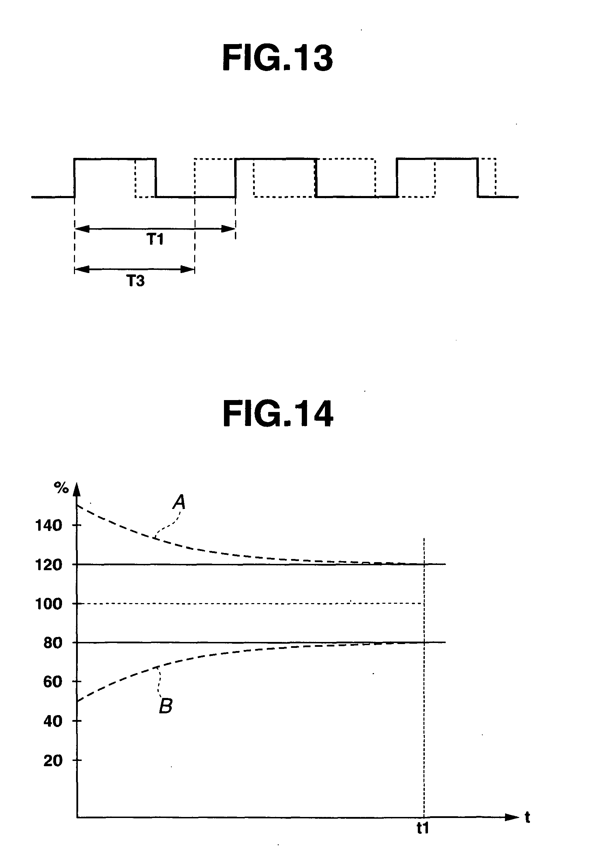

On the other hand, when the color copy is selected, a voltage V2 corresponding to a light quantity necessary for the color copy is selected in the switching portion 141. The comparison circuit 142 compares the voltage V2 corresponding to a set value of the light quantity for the color copy with the voltage signal LA corresponding to the light quantity of the electric-discharge lamp 6, which has been detected by the photodetection device 116; and when the light quantity of the electric-discharge lamp 6 is lower than the set value, outputs a pulse signal to the transistors FQ71 and FQ72 so that the ON-OFF period of the transistors FQ71 and FQ72 can be shorter, in other words, so that the ON-OFF frequency can be higher. Fig. 13 is a view showing that the pulse signal with a shorter ON/OFF period T3 of the transistors FQ71 and FQ72 than the present period T1 is output so that the emitted light of the electric-discharge lamp 6, that is, the luminosity can be increased.

As described above, a lighting circuit 100 detects the luminosity of the electric-discharge lamp 6, that is, the light quantity from the time right after the lighting started by using the photodetection device 116, and feedback-controls the electric-discharge lamp 6 so as to emit the light of the preset quantity according to a predetermined use.

Fig. 14 is a graph for describing the fluctuation of a light quantity in the case of a color copy and a monochromatic copy. When a copying machine to be used needs to illuminate a manuscript with a light having a luminosity of 120(%) for a color copy and a luminosity of 80(%) for a monochromatic copy, a conventional copying machine has emitted the unstable light as is shown by dotted lines A and B right after lighting started, but the copying machine according to the present embodiment can emit the light having a constant luminosity of 120(%) or 80(%) right after the lighting started, which is a set luminosity, as is shown in Fig. 14.

Accordingly, a lighting circuit according to the present embodiment can set a light quantity to be emitted from a rare gas fluorescent lamp at a desired value from the time right after the lighting started and keep the value constantly.

By the way, in the above described example, a controlling section 114 controls the light quantity by using a hardware circuit, but may control it by using a computer program (hereinafter, referred to as software).

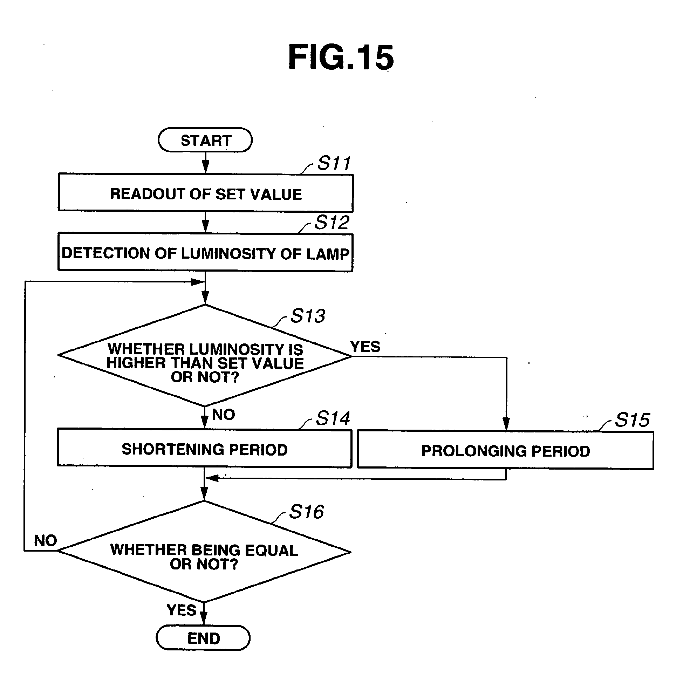

Fig. 15 is a flow chart for describing an example of a lighting control process with the use of the software. In this case, the controlling section 114 has a central processing unit (CPU) which executes the software, and a ROM and RAM for storing and executing the software.

A predetermined pulse signal corresponding to a selection signal for a color copy or a monochromatic copy is input to a controlling section 114 through an input terminal portion 111, and then the controlling section 114 reads a set light quantity which is a set value of the luminosity corresponding to a type of the selected copy (step S11), as is shown in Fig. 15. Subsequently, the controlling section 114 detects the luminosity of an electric-discharge lamp 6, that is, the light quantity from a signal output from a photodetection device 116 (step S12).

Subsequently, the controlling section 114 compares a set value (set light quantity) with a detected present luminosity, and determines whether the present luminosity is higher than the set value or not (step S 13). When the present luminosity is lower than the set value, the controlling section 114 selects NO in step S3, and outputs a pulse signal to transistors FQ71 and FQ72 so as to shorten an ON/OFF period of the transistors FQ71 and FQ72, that is, to increase the frequency (step S 14).

When the present luminosity is higher than the set value, the controlling section 114 selects YES in the step S3, and outputs a pulse signal to the transistors FQ71 and FQ72 so as to prolong the ON/OFF period of the transistors FQ71 and FQ72, that is, to decrease the frequency (step S 15).

After having finished the step S14 and the step S15, the controlling section 114 determines whether the present luminosity is equal to a set value (step S16); when the present luminosity is not equal to the set value, the controlling section 114 returns to the step S 13; and when the present luminosity is equal to the set value, the controlling section 114 finishes the processing.

In the above description, incidentally, the case of making a color copy and a monochrome copy was described as an example of needing different light quantities, but the case of making copies in different velocities (high velocity and low velocity) also needs different light quantities.

As described above, the lighting device for the electric-discharge lamp according to the present embodiment detects the luminosity of an electric-discharge lamp 6, that is, the light quantity, from the time right after lighting started by using a photodetection device 116, and feedback-controls the electric-discharge lamp 6 so as to emit the light of the preset quantity according to a predetermined use. Accordingly, the lighting device for the electric-discharge lamp according to the present embodiment can set a light quantity to be emitted from the lamp at a desired value from the time right after the lighting started, and keep the value constantly.

## Claims

1. A lighting device for an electric-discharge lamp comprising:
a transformer which supplies a lighting voltage to the dielectric-barrier discharge lamp;
a voltage control circuit for supplying voltage to a primary side of the transformer;
an inverter circuit which supplies an output of the voltage control circuit to the primary side of the transformer, in a positive phase or a negative phase;
determination means which detects a lamp current in the dielectric-barrier discharge lamp and determines a type of the dielectric-barrier discharge lamp on the basis of the detected result; and
control means for controlling the voltage control circuit and the inverter circuit on the basis of the determination result of the determination means.

2. The lighting device for the electric-discharge lamp according to claim 1, wherein the control means has a first memory for retaining a control value for each type of the dielectric-barrier discharge lamp, which is suitable for the voltage control circuit and the inverter circuit.

3. The lighting device for the electric-discharge lamp according to claim 2, wherein the first memory retains a control value necessary for lighting each type of the dielectric-barrier discharge lamp each in a 100% light-modulated state.

4. The lighting device for the electric-discharge lamp according to claim 1, wherein the determination means has a second memory which stores a value of lamp current for each type of the dielectric-barrier discharge lamp, when a predetermined lamp voltage is supplied to the dielectric-barrier discharge lamp.

5. The lighting device for the electric-discharge lamp according to claim 1, wherein the voltage control circuit includes a chopper circuit, and the inverter circuit includes a push-pull circuit.

6. A method for controlling the lighting of an electric-discharge lamp provided with a transformer which supplies a lighting voltage to the dielectric-barrier discharge lamp, a voltage control circuit for supplying voltage to a primary side of the transformer, an inverter circuit which supplies an output of the voltage control circuit to the primary side of the transformer, in a positive phase or a negative phase, and control means for controlling the voltage control circuit and the inverter circuit, comprising:
a detection step of driving the voltage control circuit and the inverter circuit with a first control value and detecting a lamp current in the dielectric-barrier discharge lamp;
a determination step of determining a type of the dielectric-barrier discharge lamp on the basis of the detection result in the detection step;
a step of deciding a second control value according to the type of the dielectric-barrier discharge lamp on the basis of the determination result in the determination step; and
a step of driving the voltage control circuit and the inverter circuit with the second control value.

7. The method for controlling the lighting of the electric-discharge lamp according to claim 6, wherein the second control value is a value necessary for lighting each type of the dielectric-barrier discharge lamp each in a 100% light-modulated state.

8. A lighting device for an electric-discharge lamp that lights a dielectric-barrier discharge lamp, the lighting device for an electric-discharge lamp comprising:
a light-quantity-comparing portion which compares a given set light quantity with a detected light quantity of the dielectric-barrier discharge lamp; and
control means for controlling at least one of a voltage and an electric current to be supplied to the dielectric-barrier discharge lamp so that the set light quantity matches the detected light quantity according to the comparison result of the light-quantity-comparing portion.

9. The lighting device for the electric-discharge lamp according to claim 8, further comprising an inverter circuit for supplying a lamp voltage to the dielectric-barrier discharge lamp, wherein
the control means controls an ON-OFF frequency of a controlling element in the inverter circuit and equalizes the set light quantity with the detected light quantity.

10. The lighting device for the electric-discharge lamp according to any one of claims 8 and 9, further comprising a chopper circuit for supplying a lamp voltage to the dielectric-barrier discharge lamp, wherein
the control means controls an ON-OFF duty ratio of a controlling element in the chopper circuit and equalizes the set light quantity to the detected light quantity.

11. A method for controlling the lighting of an electric-discharge lamp provided with a voltage control circuit and an inverter circuit both for supplying a lighting voltage to the dielectric-barrier discharge lamp, comprising:
a step of driving the voltage control circuit and the inverter circuit with a first control value to light the dielectric-barrier discharge lamp;
a light quantity comparison step of comparing a set light quantity corresponding to the first control value with a detected light quantity of the dielectric-barrier discharge lamp;
a step of deciding a second control value so that the set light quantity can be equal to the detected light quantity according to the comparison result of a light-quantity-comparing portion; and
a step of driving the voltage control circuit and the inverter circuit with the second control value.

12. The lighting device for the electric-discharge lamp according to any one of claims 1 to 5 and claims 8 to 10, wherein the dielectric-barrier discharge lamp is a rare gas fluorescent lamp.

13. The lighting device for the electric-discharge lamp according to claim 12, wherein the dielectric-barrier discharge lamp is an outer electrode type.
